# EUROPÄISCHE PATENTSCHRIFT

(11) **EP 1 792 240 B1**
(45) Veröffentlichungstag und Bekanntmachung des Hinweises auf die Patenterteilung: **29.10.2008**
(21) Anmeldenummer: 05794529.7
(22) Anmeldetag: 19.09.2005
(51) Int. Cl.: G05B 19/42

(54) **SYSTEM UND VERFAHREN ZUR WEITERVERARBEITUNG EINES, VORZUGSWEISE DYNAMISCH, INSBESONDERE ZUM ZWECK EINER BESTIMMUNG VON AUFGETRETENEM VERSCHLEIß, ERFASSTEN PROFILS EINES FESTKÖRPERS**
SYSTEM AND METHOD FOR PROCESSING A PROFILE OF A SOLID, WHICH PROFILE IS CAPTURED, PREFERABLY IN A DYNAMIC MANNER, TO DETERMINE ITS WEAR
SYSTEME ET PROCEDE POUR USINER UN PROFIL DE CORPS SOLIDE SAISI, DE PREFERENCE DE MANIERE DYNAMIQUE, NOTAMMENT POUR DETERMINER UNE USURE

(30) Priorität: 20.09.2004 DE 102004045850
(43) Veröffentlichungstag der Anmeldung: 06.06.2007
(73) Patentinhaber: Gutehoffnungshütte Radsatz GmbH, 46145 Oberhausen (DE)
(72) Erfinder: HOFFMANN, Manfred, 34132 Kassel (DE); NOWACZYK, Christian, 34123 Kassel (DE); BRINKMANN, Andreas, 46539 Dinslaken (DE); HOFFMANN, Dieter, 46499 Hamminkeln (DE); WALTER, Michael, J., 46562 Voerde (DE)
(74) Vertreter: Patentanwälte Dr. Solf & Zapf
(86) Internationale Anmeldenummer: PCT/EP2005/054668
(87) Internationale Veröffentlichungsnummer: WO 2006/032648

(56) Entgegenhaltungen:
- EP-A- 0 252 164
- EP-A- 0 456 845
- GB-A- 2 332 958
- US-A- 4 798 963
- US-A- 5 936 737
- US-A1- 2003 072 001

## Beschreibung

Die vorliegende Erfindung betrifft ein System und Verfahren zur Weiterverarbeitung eines vorzugsweise dynamisch, insbesondere zum Zweck einer Bestimmung von aufgetretenem Verschleiß, erfassten Profils eines Festkörpers.

Das US Patent US4798963 beschreibt eine Einrichtung zur Vermessung von im Fahrzeug eingebauten Rädern von Radsätzen von Schienenfahrzeugen. In einem Gleis ist ein bestimmter Messbereich mit einer Durchmessererfassungseinrichtung und einer berührungslosen Profilerfassungseinrichtung vorgesehen. Beide Einrichtungen sind mit zugeordneten Auswerteinrichtungen verbunden, die dem aufgetretenen Verschleiß berechnen. Es ist auch möglich, die jeweils ermittelten Differenzen zwischen Soll- und Istkontour des Rades, sofern sie einen unzulässigen Wert übersteigen, in die Steuerung einer Werkzeugmaschine einzugeben, die dann das Profil wieder aufarbeitet.

Die deutsche Patentanmeldung DE 103 13 191.4 und die internationale Patentanmeldung PCT/EP 04/00295 beschreiben ein berührungsloses Verfahren zur dynamischen Erfassung des Profils eines Festkörpers, insbesondere zum Zweck einer Bestimmung von an dem Festkörper aufgetretenen Verschleiß, wobei - um die Einhaltung kurzer Messzeiten, einen mindestens drei Größenordnungen überdeckenden Messbereich, wie Zehntelmillimeter, Millimeter und Zentimeter, und eine hohe Messgenauigkeit auch unter rauhen Betriebsbedingungen zu ermöglichen - vorgesehen ist, dass mindestens ein von einer Lasereinrichtung erzeugter, zu mindestens einem linienförmigen Lichtband aufgeweiteter Lichtstrahl auf mindestens einen Bereich der Oberfläche des Festkörpers projiziert wird, wobei der Festkörper an der Lasereinrichtung vorbeibewegt wird und das von dem Bereich der Oberfläche des Festkörpers reflektierte Licht in einer Abbildungseinrichtung, deren optische Achse in einem festen Triangulationswinkel zur Projektionsrichtung der Lasereinrichtung steht und die in einem festen Basisabstand zur Lasereinrichtung angeordnet ist, fokussiert und mit einer gegenüber einer Bewegungsgeschwindigkeit des Festkörpers hohen Frequenz mittels eines flächenförmigen Lichtaufnahmeelementes erfasst wird, wonach aus von dem Lichtaufnahmeelement abgegebenen Signalen in Abhängigkeit von dem Triangulationswinkel und dem Basisabstand in einer Datenverarbeitungseinrichtung durch

trigonometrische Beziehungen und unter Verknüpfung mit entsprechend der Bewegungsgeschwindigkeit des Festkörpers bestimmten Korrekturwerten die Messwerte des Profils gewonnen und in der Datenverarbeitungsanlage als Profilogramm gespeichert werden.

Bei dem Festkörper kann es sich dabei um einen eine translatorische, eine rotierende oder bevorzugt um einen eine rollende Bewegung ausführenden rotationssymmetrischen Körper, insbesondere um ein Fahrzeugrad, handeln. Das erfindungsgemäße Verfahren stellt damit eine äußerst vorteilhafte Möglichkeit dar, Profile eines Rades während der Vorbeifahrt zu bestimmen und daraus Rückschlüsse über den Verschleiß zu ziehen.

Im Sinne einer vollständigen Profilerfassung kann dabei vorgesehen sein, dass mehrere Profilogramme als Teilprofilogramme unter Einsatz von mindestens drei, auf verschiedene Seiten der Oberfläche des Festkörpers liegende Bereiche Lichtbänder projizierenden Lasereinrichtungen und diesen zugeordneten Abbildungseinrichtungen bestimmt werden, die Teilprofilogramme in der Datenverarbeitungsanlage gespeichert werden und daraus ein Gesamtprofilogramm gewonnen wird. Bei einem in der Grundgestalt im Wesentlichen zylindrischen oder ringförmigen Festkörper, wie einem Fahrzeugrad, können die mindestens drei Bereiche, auf die die Lichtbänder projiziert werden, dabei bevorzugt auf den beiden Deckflächen und auf der Mantelfläche des Zylinders oder Ringes liegen. Das Profilogramm, die Teilprofilogramme und/oder das Gesamtprofilogramm können dann mit jeweils einem oder mehreren Bezugsprofilogrammen verglichen und die jeweiligen Abweichungen von dem jeweiligen Bezugsprofilogramm festgestellt werden, was ein Maß für den aufgetretenen Verschleiß darstellt bzw. ein Maß dafür, ob der aufgetretene Verschleiß noch in einem tolerierbaren Bereich liegt. Unter Zuhilfenahme korrelativer Verknüpfungen zwischen der aufgetretenen Beanspruchungsdauer des Festkörpers und dem festgestellten Verschleiß kann in diesem Zusammenhang auch eine extrapolierende Aussage darüber getroffen werden, wie lange eine weitere Beanspruchungsdauer noch unbedenklich bzw. wann eine erneute Prüfung notwendig erscheint.

Dabei hat es sich als vorteilhaft erwiesen, wenn das Profilogramm, die Teilprofilogramme, das Gesamtprofilogramm, das jeweilige Bezugsprofilogramm und/oder die jeweiligen Abweichungen auf eine feste, langzeitlich unveränderliche geometrische Basisgröße, wie einen nichtverschleißenden Radkranzinnenumfang, bezogen werden. Auf diese Weise kann beispielsweise die Verschleißfläche als eine Abwicklung dargestellt werden, auf der das Höhenprofil gegenüber der Basisgröße durch geeignete Darstellungsmittel abgebildet wird. Z. B. können das Profilogramm, die Teilprofilogramme, das Gesamtprofilogramm, das jeweilige Bezugsprofilogramm und/ oder die jeweiligen Abweichungen in einer Anzeigevorrichtung, wie einem Display, visualisiert werden.

In den genannten Anmeldungen wird auch ein Verschleißprüfstand für Räder eines Schienenfahrzeugs, wie Eisenbahnräder, beschrieben, bei dem das beschriebene Verfahren Anwendung findet. Der Verschleißprüfstand ist für auf Schienen rollende, mit einer translatorischen Geschwindigkeit und einer Winkelgeschwindigkeit vorbei bewegte, Räder als zu vermessende Festkörper konzipiert ist. Dabei wird als Basisgröße mit Hilfe eines Gleichungssystems aus den dynamisch bestimmten Messwerten insbesondere ein Bezugsradius des rollenden Rades ermittelt. Der ermittelte Radius kann einerseits als Grundlinie für Messwerte der Profilhöhe dienen, die auf der Mantelfläche des Rades ermittelt werden, andererseits ist es möglich, diesen Radius zur Bestimmung von Korrekturwerten, die entsprechend dem der Messung zu Grunde liegenden Laser-Triangulationsverfahren zu berücksichtigen sind, heranzuziehen.

Was die Weiterverarbeitung des dynamisch erfassten Profile betrifft, so wird ausgeführt, dass das jeweilige Profilogramm, die Teilprofilogramme und/oder das Gesamtprofilogramm mit jeweils mit einem oder mehreren Bezugsprofilogramm(en) verglichen und die jeweiligen Abweichungen von dem jeweiligen Bezugsprofilogramm festgestellt werden können. Bei den Bezugsprofilogrammen kann es sich bevorzugt um zulässige Sollmaße handeln, ein Bezugsprofilogramm könnte aber auch ein gespeicherter Datensatz von Messwerten aus einer früheren Messung sein, so dass die jeweiligen Abweichungen Aufschluß darüber geben, wie groß der seit der zurückliegenden Messung aufgetretene Verschleiß ist.

Der vorliegenden Erfindung liegt die Aufgabe zu Grunde, ein System und Verfahren zur Weiterverarbeitung eines, vorzugsweise dynamisch, insbesondere zum Zweck einer Bestimmung von aufgetretenem Verschleiß, erfassten Profils eines Festkörpers zu schaffen, das über die bekannte Verarbeitung von Messwertsignalen eines Festkörperprofils, insbesondere zur Feststellung des Verschleißes und zum Vergleich mit einem Bezugsprofil, hinausgeht.

Erfindungsgemäß wird dies durch ein Verfahren der genannten Art erreicht, bei dem Daten des erfassten Profils des Festkörpers als Steuergröße zur Steuerung mindestens einer Maschine zur Oberflächenbearbeitung, insbesondere zur mechanischen Oberflächenbearbeitung eines Schienenfahrzeugrades, eingesetzt werden.

Erfindungsgemäß wird dies auch durch ein System der genannten Art erreicht, das Systembestandteile aufweist, die in ihrer Wechselwirkung die Steuerung mindestens einer Maschine zur Oberflächenbearbeitung, insbesondere zur mechanischen Oberflächenbearbeitung eines Schienenfahrzeugrades, unter Verwendung der Daten des erfassten Profils des Festkörpers realisieren.

Hierbei können zur Datenaufbereitung für die Maschinensteuerung weitere Kenngrößen, wie Geometriedaten, Technologiedaten, Werkzeugdaten und/oder Arbeitspläne, herangezogen werden. Die Übertragungssteuerung an die Maschine kann dann mittels eines geeigneten Hardwareinterfaces, wie elektrischen Schnittstellen, z. B. RS232, RS422, TTY, erfolgen. Auch die Materialzufuhr kann solchermaßen gesteuert werden.

Die Oberflächenbearbeitung kann dabei insbesondere instandsetzend - im Sinne einer sogenannten Reprofilierung - insbesondere an einem verschlissenen Festkörper erfolgen, dem das erfasste Festkörperprofil zuzuordnen ist. Es ist aber auch möglich, dass aus mehreren Festkörperprofilen verallgemeinernd, z.B. durch Mittelwertbildung und/oder Inter- bzw. auf eine weitere Laufzeit oder eine angestrebte Gesamtlaufdauer bezogene Extrapolation für jeweils bestimmte Geometrien, Technologien, z.B. einen bestimmten Werkstoffeinsatz und/oder eine anfänglich eingestellte Oberflächengüte sowie für die Werkzeugdaten Steuergrößen zur Herstellung eines neuen Festkörpers bereitgestellt werden, etwa beim vollständigen Ersatz nicht mehr reprofilierbarer Schienenfahrzeugräder und dessen eventuelle Anpassung an einen vorhandenen noch reprofilierbaren Radsatz.

Wenn, wie eingangs dargestellt, die Weiterverarbeitung der Daten eines Profils den Vergleich des jeweiligen Profilogramms mit einem Bezugsprofilogramm umfasst und die jeweiligen Abweichungen von dem jeweiligen Bezugsprofilogramm festgestellt werden, bedeutet dies, dass die Reparatur, oder gegebenenfalls auch die Produktion, in optimaler Weise dem realen Verschleiß angepasst werden kann. Dadurch treten hinsichtlich der Technologie und des Materialeinsatzes Vorteile im Sinne der Erschließung eines Sparpotentials auf. So können beispielsweise nicht reparaturbedürftige Räder, bei denen die Profilogramme nach Vergleich mit einer sogenannten, insbesondere an einem Verschleißprüfstand aufgenommenen, Lemkurve nicht nur ein vorgegebener Grenzwert des Verschleißes, sondern auch ein vorgegebener, einem geringeren Verschleiß entsprechender Wamwert nicht erreicht wird, von Vornherein von einer Reparatur ausgeschlossen werden.

Weitere vorteilhafte Ausführungen der Erfindung sind in der nachfolgenden detaillierten Beschreibung enthalten.

Anhand eines durch die beiliegende Zeichnung veranschaulichten Ausführungsbeispiels wird die Erfindung näher erläutert. Dabei zeigen
- Fig. 1: ein Blockbild zur Veranschaulichung des erfindungsgemäßen Verfahrens und Systems,
- Fig. 2: in einem Display dargestellte Visualisierungen von Profilogrammen, wie sie bei einem erfindungsgemäßen Verfahren und System zur Anwen- dung kommen können,
- Fig. 3: in einer schematisierten perspektivischen Ansicht, eine prinzipielle Dar- stellung zur Veranschaulichung der Grundlagen für das bevorzugte Verfahren, mit dem das nach dem erfindungsgemäßen Verfahren ver- arbeitete Profils eines Festkörpers erfasst wird,
- Fig. 4: einen Programmablaufplan betreffend die Erfassung des Profils eines Festkörpers im Zusammenhang mit dem erfindungsgemäßen Verfahren,
- Fig. 5: eine perspektivische Ansicht eines Verschleißprüfstandes für Räder eines Schienenfahrzeugs, wie Eisenbahnräder, auf die das erfindungs- gemäße Verfahren bevorzugt Anwendung findet

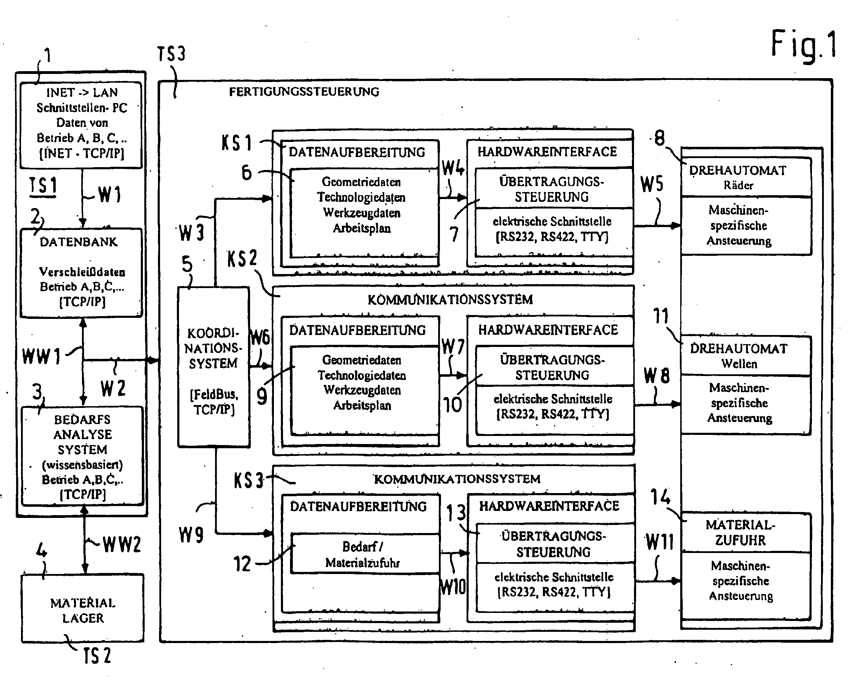

Wie Fig. 1 veranschaulicht, ist ein erfindungsgemäßes System aus mehreren Systembestandteilen gebildet, deren Charakteristik und Wirkungsweise in den dargestellten Blöcken angegeben und durch die eingezeichneten Pfeile symbolisiert ist. Mit den Bezugszeichen 1 bis 14 sind dabei die einzelnen, im dargestellten Fall vorhandenen Systemelemente bezeichnet, mit den Bezugszeichen W1 bis W11 an den Wirkungspfeile, vorhandene Systemkopplungen zwischen den Systembestandteilen, wobei die Bezugszeichen WW1 und WW2 spezielle Systemkopplungen kennzeichnen, die im Sinne einer Wechselwirkung agieren. Mit den Bezugszeichen TS1 bis TS3 sind Subsysteme des erfindungsgemäßen Systems und mit den Bezugszeichen KS1 bis KS3 Kommunikationssysteme bezeichnet, bei denen es sich wiederum um Untersysteme von des der Fertigungssteuerung dienenden Subsystems TS3 handelt.

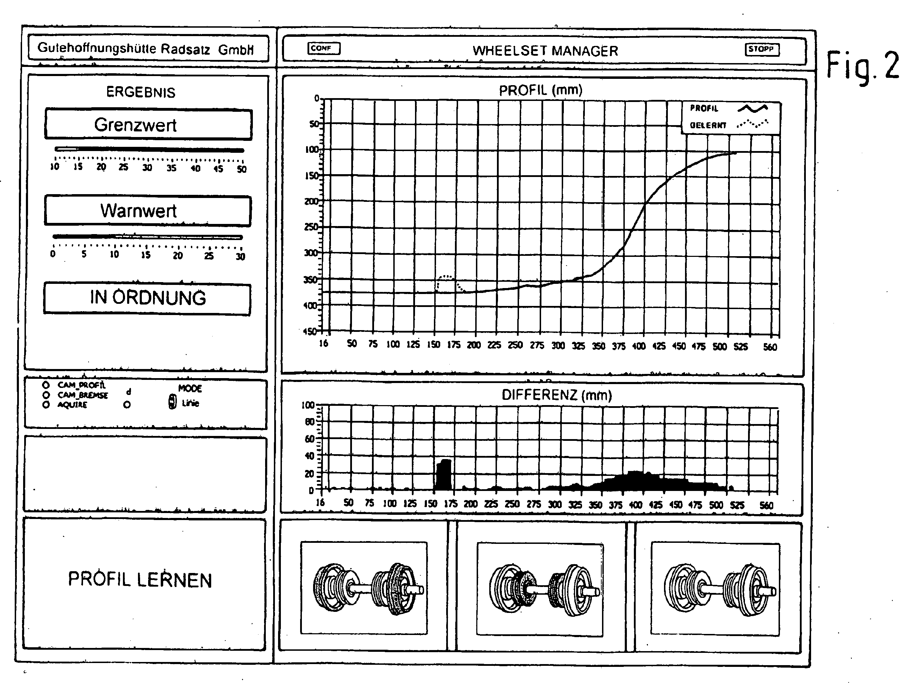

Das der Fertigungssteuerung dienende Subsystem TS3 umfasst neben den drei vorhandenen Kommunikationssystemen KS1 bis KS3 ein Koordinierungssystem 5 und Bearbeitungsmaschinen, insbesondere Drehautomaten 8, 11, zur Oberflächenbearbeitung, insbesondere zur mechanischen Oberflächenbearbeitung eines Schienenfahrzeugrades, wobei diese Bearbeitung unter Verwendung von Daten eines erfassten Profils des Festkörpers realisiert wird, wie dies beispielsweise in Fig. 2 dargestellt ist.

Die Kommunikationssysteme KS1 bis KS3 bestehen jeweils aus einem Systemelement zur Datenaufbereitung 6, 9, 12 und einem Hardwareinterface 7, 10 13 zur Übertragungssteuerung an die Maschinen (Drehautomaten 8, 11) bzw. zu einer Materialzufuhr 14. Die Ansteuerung erfolgt dabei immer maschinenspezifisch, z. B., wie angegeben, über elektrischen Schnittstellen RS232, RS422 und TTY. So können z. B. Vorschub- und Zustellgeschwindigkeiten zu einer im Ergebnis zu erzielenden abzutragenden Materialhöhe gesteuert werden.

In den Systemelementen zur Datenaufbereitung 6, 9 werden neben den Daten des erfassten Profils des Festkörpers als Steuergröße, die zur Verschleißbestimmung - wie z. B. die Teilgrafik "DIFFERENZ" in Fig. 2 zeigt - bevorzugt mit einem Bezugsprofil verglichen werden, zur Steuerung mindestens einer Maschine, nämlich des Drehautomaten 8, zur Oberflächenbearbeitung, weitere Kenngrößen, wie Geometriedaten, Technologiedaten, Werkzeugdaten und/oder Arbeitspläne, herangezogen.

Ein Systemelement zur Datenaufbereitung 12 kann auch - wie dargestellt - für die Bestimmung von Materialbedarf und -zufuhr dienen.

Des Weiteren ist es auch möglich, dass das erfindungsgemäße System nicht nur die Funktion einer Maschine zur mechanischen Oberflächenbearbeitung, wie des Drehautomaten 8, zur Bearbeitung insbesondere der Lauffläche, der Räder, sondern die Funktionen mehrerer Bearbeitungsmaschinen umfasst, wie z. B. die eines Drehautomaten 11 zur mechanischen Bearbeitung von Wellen.

Den einzelnen Kommunikationssystemen KS1 bis KS3, in denen der Fluß der technischen Informationen in Form von Signalen vorwiegend von einem jeweiligen Eingang zu einem jeweiligen Ausgang vorwiegend linear erfolgt (W3, W4, W5 in KS1, W6, W7, W8 in KS2, W9, W10, W11 in KS3), kann ein Koordinationssystem 5 vorgeordnet sein, in dem eine gegenseitige Abstimmung der Informationssignale erfolgt und das auf diese Weise zusammen mit den Kommunikationssystemen KS1 bis KS3 das Subsystem zu Fertigungssteuerung TS3 bildet.

Wie dargestellt - kann eine Eingangsgröße (Systemkopplung W2) für das Subsystem zur Fertigungssteuerung TS3 beispielsweise aus mindestens einem weiteren Subsystem TS1 oder aus einer Wechselwirkung WW1 zweier weiterer Subsysteme, wie des Subsystems TS1 und TS2 (Materiallager 4) stammen.

Das genannte Subsystem TS1 umfasst im dargestellten Fall drei grundlegende Systemelemente 1, 2, 3.

Beim ersten Systemelement 1 handelt es sich um eine Schnittstelle, die z.B. eine Internet- (INET) oder lokale Netzwerkanbindung (LAN) über einen Personalcomputer (PC) realisiert, wobei vorteilhafterweise ein herkömmliches TCP/IP-Protokoll zur Datenübergabe, z.B. zur Übermittlung von an mehreren unterschiedlichen Stellen (Betriebe A, B, C,...) erfassten Daten von Festkörper-, insbesondere Radprofilen, zur Anwendung kommen kann.

Im zweiten Systemelement 2 ist eine Datenbank enthalten, in der die an den unterschiedlichen Stellen (Betriebe A, B, C,...) erfassten Daten von Festkörper-, insbesondere von Radprofilen, in Form von Verschleißdaten (siehe, wie erwähnt, Teilgrafik "Differenz" in Fig. 2), km-Leistungen, Soll- und/oder Lernkurven niedergelegt sind.

Das zweite Systemelement 2 steht im Informationsaustausch (Wechselwirkungskopplung WW1) mit dem dritten Systemelement 3, welches ein Bedarfsanalysesystem darstellt, das seinerseits mit dem Materiallager TS2, 4 in Wechselwirkung WW2 steht. Die Bedarfsanalyse kann in dem dritten Systemelement 3 auf der Basis wissensbasierter Datenbanken vorgenommen werden, die in das Systemelement 3 implementiert sind. Hierbei kann es sich um empirisch durch Extra- oder Interpolation von Verschleißmesswerten gewonnene Datenbanken handeln oder um Datenbanken, die auf der Zugrundelegung eines bestimmten theoretisch aufgestellten Verschleißmodells beruhen, wobei auch Hybridformen möglich sind. Mit Hilfe der Bedarfsanalyse können Materiallieferungen in das Lager 4 gesteuert werden, beispielsweise derart, dass im Materiallager 4 immer Material im Sinne einer "Just-In-Time"-Produktion oder aber bevorzugt - im Sinne stabiler Fertigungsbedingungen - ein Materialvorlauf für eine vorbestimmte Zeitspanne, z. B. drei bis vier Wochen, zur Verfügung steht.

Fig. 2 enthält neben der bereits erwähnten Teilgrafik "Differenz", die in Form eines Säulendiagramms der Profilhöhe über einer Messlänge die erfindungsgemäß bevorzugt als Steuergröße für den Drehautomaten 8 in Fig. 1 zur Anwendung kommenden Verschleißdaten zeigt, in der Teilgrafik "Profil" auch die Daten des ursprünglich erfassten Profils (PROFIL) in der Gegenüberstellung mit einer Sollkurve (GELERNT). Die Darstellungsart entspricht dabei der Teilgrafik "Differenz", wobei aber anstelle des Säulendiagramms eine Profillinie eingezeichnet ist. Bei der Darstellung in Fig. 2 kann es sich um ein in ein Teilsystem TS1, TS2, TS3 eines erfindungsge mäßen Systems integriertes Display handeln, in dem in Form grafischer Darstellungen (unten) auch Mess- und oder zu bearbeitende Stellen angezeigt werden. Das Display kann auch verbale Informationen enthalten, wie die links im Bild dargestellten Ergebniszusammenfassungen (ERGEBNIS), in den z. B. angezeigt werden kann, ob das gemessene Profile einen Grenzwert oder einen Warnwert überschreitet oder in Ordnung ist, so dass es nicht reprofiliert werden muß.

Die Subsysteme TS1, TS2, TS3 können sich - im Sinne einer optimierten Standortverteilung - an räumlich getrennten Stellen befinden. Insbesondere kann die Erfassung der Daten des Profils (PROFIL) in einem Clienten einer Client-Server-Schaltung mit räumlich vom Clienten entfernten Server realisiert werden.

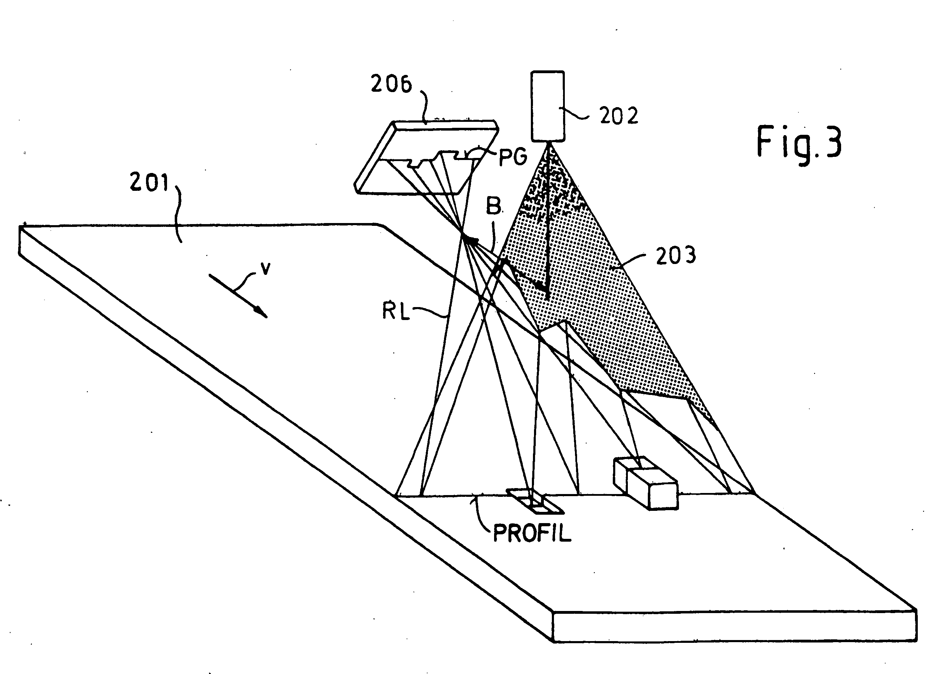

Anhand von Fig. 3 soll eine Erläuterung der Grundlagen für das bevorzugte Verfahren erfolgen, mit dem nach dem erfindungsgemäßen Verfahren verarbeitete Daten des Profils (PROFIL) eines Festkörpers erfasst werden können. Diese Erläuterung ist insofern von Bedeutung, als sich aus dem Prinzip der Erfassung der Daten insbesondere die Natur der Daten des Profils (PROFIL) ergibt.

Zur Aufnahme der Topographie eines, vorzugsweise mit einer Geschwindigkeit v bewegten, dreidimensionalen Festkörpers 201, d. h. zur Gewinnung von erfindungsgemäß zu verarbeiteten Daten des Profils (PROFIL) wird, wie in Fig. 3 dargestellt, mit einem aus einer Lasereinrichtung 202 abgegebenen, zu einem Lichtband 203 aufgeweiteten Laserstrahl gearbeitet. Das Lichtband 203 wird von der Oberfläche des Festkörpers 201 als reflektiertes Licht RL zurückgeworfen und von einem flächenförmigen Aufnahmeelement 206, wie einer CCD-Kamera als Lichtaufnahmeelement, in Form eines Profilogrammbildes PG erfasst. Danach werden aus von dem Aufnahmeelement 206 abgegebenen Signalen - entsprechend dem Wesen des eingesetzten, an sich bekannten Lasertriangulationsverfahrens - unter Berücksichtigung eines Triangulationswinkels und eines Basisabstands B zwischen der optischen Achse des reflektierten Lichts RL und der Lasereinrichtung 2 - in einer nicht dargestellten Datenverarbeitungseinrichtung, wie einem PC, die Messwerte des Profils (PROFIL) bestimmt und als Profilogramm gespeichert. Stellvertretend für ein solches Profilogramm steht in der schematisierten Darstellung von Fig. 3 der Linienzug des Profilogrammbildes PG auf dem Lichtaufnahmeelement 206.

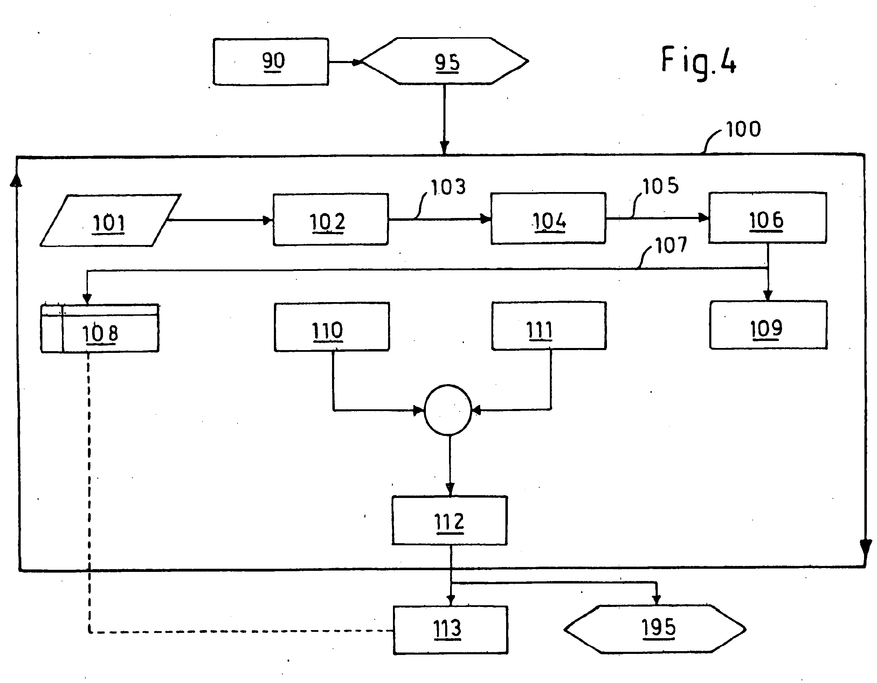

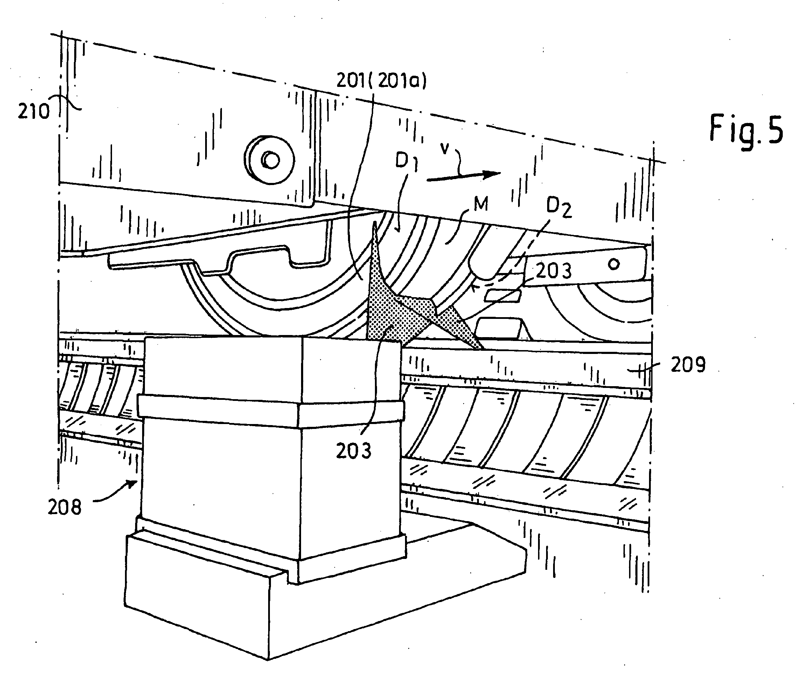

Der in Fig. 4 dargestellte Programmablaufplan ist insbesondere auf die berührungslose Erfassung des Profils (PROFIL) von Rädern eines Schienenfahrzeugs, wie Eisenbahnrädem, mittels des in Fig. 3 gezeigten Lasertriangulationsverfahrens zugeschnitten. Ein solches Rad ist - mit dem Bezugszeichen 201a versehen - an einem Schienenfahrzeug 210 in Fig. 5 exemplarisch dargestellt.

Der Programmablaufplan umfasst insbesondere eine Aufnahmeschleife 100 zur dynamischen Erfassung des Profils (PROFIL) des Festkörpers 201 bzw. 201a, die nach Systemstart-Vorgängen in Gang gesetzt wird, welche nach durch eine Anforderung 90 von einem Server, der sich als Systemelement 1 bevorzugt in dem Subsystem TS1 gemäß Fig. 1 befindet, initiiert werden. Diese Systemstart-Vorgänge sind in Fig. 4 durch den mit dem Bezugszeichen 95 gekennzeichneten Kasten symbolisiert und können die Ansteuerung einer Ampel für das Schienenfahrzeug 210, die Aktivierung eines Triggers zur Bildauslösung in dem Aufnahmeelement 206 sowie ein Einschalten der Lasereinrichtung 202 umfassen.

In der Aufnahmeschleife 100 wird dabei durch einen Laserdistanzsensor 101, bei dem es sich insbesondere um das Lichtaufnahmeelement 206 handelt, nach einer Signalkonditionierung 102 insbesondere ein Abstandssignal 103 bereitgestellt, d. h. es erfolgt zu einem Anfangszeitpunkt t₀ eine Ermittlung von Anfangsbedingungen des Festkörpers 201, 201a, wie des Abstandes zur Lasereinrichtung 202, einer Lichtintensitätsverteilung und gegebenenfalls einer zeitlichen Veränderung dieses Abstandes als erste und - bei beschleunigter Bewegung - auch zweite Ableitung des Weges nach der Zeit.

In dem Verfahrensschritt "Signalauswertung" 104 erfolgt dann aus den Anfangsbedingungen - insbesondere aus dem Abstandssignal 103 - die Bestimmung eines Erfassungszeitpunktes t_{flash}, für den aus dem Aufnahmeelement 206 abgegebene Signale zur Gewinnung der Messwerte des Profils (PROFIL) ausgewählt werden. Im Detail bedeutet dies, dass ein Auslöseimpuls 105 an das Aufnahmeelement 206, z. B. an eine Kamera, abgegeben wird, wodurch zum Erfassungszeitpunkt t_{flash} eine Bildauslösung 106 erfolgt. Der aus den Anfangsbedingungen bestimmte Erfassungszeitpunkt t_{flash} sollte dabei mit dem Kriterium möglichst größter Zeitnähe zu dem An fangszeitpunkt t₀ ermittelt werden, da sich für diesen Fall die zum Anfangszeitpunkt t₀ und zum Erfassungszeitpunkt t_{flash} vorliegenden Signale in für die Signalauswertung vorteilhafter Weise nur wenig unterscheiden.

Die Bestimmung des Erfassungszeitpunktes t_{flash} aus den Anfangsbedingungen (Abstandssignal 103) kann dabei insbesondere mittels eines digitalen Signalprozessors (DSP) vorgenommen werden, der vorzugsweise in eine vorhandene Datenverarbeitungseinrichtung integriert werden kann. Dies bedingt unter Umständen die Vorschaltung eines Analog-Digital-Wandlers vor den DSP, falls der Laserdistanzsensor 101 ein digitales Signal nicht liefert.

Ein digitaler Signalprozessors (DSP) ist wegen seiner genauen Voraussagbarkeit und äußerst kurzen notwendigen Zeit zur Ausführung der gewünschten Operationen insbesondere für eine Real-Time-, d. h. kontinuierliche, Verarbeitung der Signale prädestiniert. Seine Verwendung für die Signalauswertung 104 gestattet es vorteilhafterweise, die in Form von digitalen Signalen vorliegenden Daten sowohl hinsichtlich einer Datenmanipulation, wie Datenbewegung, Speicherung und/oder Wertprüfung, als auch hinsichtlich mathematischer Berechnungen, wie Additionen und Multiplikationen optimal zu verarbeiten. So können, was die mathematischen Berechnungen betrifft, bei der Signalauswertung 104 Filterungen, Faltungen sowie Fourier-, Laplace- und/oder Z-Transfomationen im Millisekundenbereich vorgenommen werden. Was die Datenmanipulation betrifft, so ist mittels eines DSP vor einer Datenspeicherung oder - fernübertragung - ebenso im Millisekundenbereich - eine hocheffiziente Datenkompression möglich.

Unter Einsatz eines DSP ist auch möglich, die zeitliche Veränderung des Abstandes des Festkörpers 201, 201a zur Lasereinrichtung 202, d. h. beispielsweise die Geschwindigkeit von einzelnen für die dynamische Profilerfassung besonders relevanten Teilbereichen des Festkörpers 201, 201a, die bevorzugt für die Bestimmung des Erfassungszeitpunktes t_{flash} herangezogen werden kann, aus den Anfangsbedingungen zu ermitteln, falls diese Geschwindigkeit nicht als zu den Anfangsbedingungen gehörig durch direkte Bestimmung erfasst oder fest vorgegeben bzw. eingestellt ist.

Im Sinne einer schnellen Signalverarbeitung - und damit Zeitnähe zwischen Anfangszeitpunkt t₀ und zum Erfassungszeitpunkt t_{flash} - ist es günstig, wenn zur Ermittlung der Anfangsbedingungen des Festkörpers 201, 201a zum Anfangszeitpunkt t₀ die vom Aufnahmeelement 206 abgegebenen Signale zur Gewinnung eines Musters, insbesondere einer binär codierten Maske, eingesetzt werden und der Erfassungszeitpunkt t_{flash} vorzugsweise mit dem Kriterium des Vorhandenseins, d. h. einer Wiedererkennung, dieses Musters festgelegt wird.

Zur Gewinnung und Wiedererkennung des Musters kann dabei mit Vorteil eine zum Anfangszeitpunkt t₀ und/oder zum Erfassungszeitpunkt t_{flash} auf dem Festkörper 201, 201a vorliegende Lichtintensitätsverteilung, insbesondere in Form einer Transparenzverteilung, in einem Histogramm erfasst und, vorzugsweise unter Verwendung einer Look-up-Tabelle (LUT), einer Bildtransformation, insbesondere einer Schwellenwertoperation, wie einer, vorzugsweise mittels Laplace-Umformung vorgenommenen Hochpassfilterung, unterzogen werden. Unter Look-up-Tabelle (LUT) wird dabei - wie in der Bildverarbeitung üblich - eine assoziativ verbundene Struktur von Index-Nummern eines Feldes mit Ausgabewerten verstanden. Eine bekannte LUT ist beispielsweise die sogenannte Colormap oder Palette. Mit ihr werden einer begrenzten Anzahl Farbindizes - üblicherweise 256 - Farb- und Intensitätswerte zugeordnet. Im Rahmen der Erfindung können insbesondere erfasste und/oder dann transformierte Look-up-Tabellen dynamisch an die Anfangsbedingungen zum entsprechenden Zeitpunkt t₀ angepasst werden. Eine derartige Signalverarbeitung wird somit in optimaler Weise zufällig wechselnden oder regelmäßig vorhandenen Umweltbedingungen, wie z. B. der Veränderung von Beleuchtungsverhältnissen durch Hallenlicht, Sonnenstand oder jahreszeitlichen Einflüssen, wie Schnee bei Outdoor-Erfassungen, gerecht.

Zur Gewinnung und Wiedererkennung des Musters, insbesondere der binär codierten Maske, kann insbesondere ein Alphakanal, vorzugsweise ein binärer Alphakanal, eingesetzt werden. Unter Alphakanal (α-Kanal) ist dabei ein - in digitalen Bildern bei Bildaufnahme und Verarbeitung - zu den üblicherweise verwendeten drei Farbkanälen zusätzlich vorhandener Kanal zu verstehen, der über die in einem Farbraum codierten Farbinformationen hinaus auch die Transparenz ("Durchsichtigkeit") der einzelnen Bildpunkte speichert. Hierzu kann beispielsweise ein Byte pro Bildpunkt bereitgestellt werden, womit sich - wie erwähnt - 2⁸ = 256 mögliche Abstufungen für die Lichtintensität ergeben. Ein binärer Alphakanal ist ein minimalisierter Alphakanal, der auf der Verwendung von nur einem Bit zur Codierung der Transparenz beruht und daher nur angeben kann, ob ein Bildpunkt entweder vollständig transparent (schwarz) oder vollständig opak (weiß) ist.

Bei und neben der bzw. in Ergänzung oder alternativ zu der vorstehend exemplarisch beschriebenen Vorgehensweise können zur Extraktion und Wiedererkennung eines Erkennungsmusters auch andere der üblicherweise unter dem Namen "Intelligente Bildverarbeitung" subsumierten Methoden, insbesondere Filteroperationen, wie das sogenannte Schärfen eines Bildes oder die Erzeugung eines Chromeffektes, eingesetzt werden.

Wenn zum Erfassungszeitpunkt t_{flash} die Bildauslösung 106 erfolgt, wird insbesondere eine Bildmatrix 107 - vorzugsweise als erstes vollständiges Bild nach dem Trigger-Auslöseimpuls 105 - erfasst und das erfasste Bild einer Speicherung 108 zugeführt. Gleichzeitig erfolgt dabei die Zurücksetzung 109 eines Timers. Die beschriebenen Vorgänge laufen, wie durch die Aufnahmeschleife 100 veranschaulicht wird, wiederholt ab.

Als Abbruchkriterien für die Prozesse in der Aufnahmeschleife 100 dienen die durch die mit den Bezugszeichen 110 und 111 bezeichneten Kästen veranschaulichten Bedingungsüberprüfungen. Es wird dabei einerseits überprüft (Kasten 110), ob der Timer bereits mehr 10 s läuft, und andererseits, ob alle Achsen des Schienenfahrzeugs 210 aufgenommen sind (Kasten 111). Trifft eine dieser Bedingungen zu, wird die Bildaufnahme gestoppt (Kasten 112). Die Frage, ob der Timer bereits mehr 10 s läuft, zielt dabei darauf ab, festzustellen, ob der Festkörper 201 bzw. 201a eventuell zu einem Stillstand gekommen ist. Nach dem Stoppen 112 der Bildaufnahme können die gespeicherten Bilddaten 108 an den Server gesendet werden (Kasten 113). Gleichzeitig können die Systemstopp-Vorgänge "Trigger ausschalten", "Lasereinrichtung 202 ausschalten" und "Ampelansteuerung für das Schienenfahrzeug 210" erfolgen, die durch den mit dem Bezugszeichen 195 gekennzeichneten Kasten symbolisiert sind. Fig. 5 zeigt eine typische Anwendung des erfindungsgemäßen Verfahrens, und zwar bei der Verschleißbestimmung. Die Darstellung gibt eine perspektivische Ansicht eines Verschleißprüfstandes 208 wieder, der für auf Schienen 209 rollende, mit einer Geschwindigkeit v vorbeibewegte, Räder 201a als zu vermessende Festkörper 201, konzipiert ist. Zur Realisierung der in dem Programmablauf nach Fig. 4 dargestellten Vorgänge, insbesondere der Aufnahmeschleife 100 kann dabei in den Prüfstand 208 die entsprechende Hardware inkorporiert sein, wodurch vorteilhafterweise - wie bereits erwähnt - eine Client-Server-Schaltung realisiert werden kann, bei der sich der Client am Gleis 209 und der Server an einem räumlich entfernten Standort befindet.

Das Rad 201 a des Schienenfahrzeugs 210 stellt einen rotationssymmetrischen, in der Grundgestalt im wesentlichen zylindrischen bzw. ringförmigen Festkörper 1, dar, wobei im dargestellten Fall zwei Bereiche, auf die Lichtbänder 203 projiziert werden, vorgesehen sind- Die Bereiche liegen auf den beiden Deckflächen D₁, D₂ und auf der Mantelfläche M des Zylinders bzw. des Ringes. Die Vorteilhaftigkeit des Einsatzes zweier Lichtbänder 3a, 3b besteht dabei in Folgendem: Dadurch, dass zu einem Anfangszeitpunkt t₀ eine Ermittlung der Anfangsbedingungen 103 des Festkörpers 201, 201a erfolgt und danach aus den Anfangsbedingungen 103 der Erfassungszeitpunkt t_{flash} bestimmt wird, für den die aus dem Aufnahmeelement 206 abgegebenen Signale ausgewählt werden, besteht die Möglichkeit, die Lichtbänder 203 - gleichzeitig oder auch zeitversetzt - auf ein und denselben Messort in Bezug auf eine Position auf der Mantelfläche M zu projizieren. Dies wiederum ermöglicht es, dass Bereiche der verschiedenen Seiten D₁, D₂, M der Oberfläche des Festkörpers 1, die durch Abschattung infolge einer vorzugsweise seitlichen Einstrahlung der Lichtbänder 203 wegen einer Abschattung durch ein Lichtband 203 nicht erfasst werden, bei entsprechender Positionierung der erzeugenden Lasereinrichtungen 202 relativ zueinander einer Erfassung durch das jeweils andere Lichtband 203 zugänglich sind. Die derart ermittelten Teilprofilogramme können in der Datenverarbeitungseinrichtung gespeichert und daraus durch Überlagerung ein Gesamtprofilogramm gewonnen werden.

Das erfindungsgemäße Verfahren ermöglicht vorteilhafterweise die Erfassung und Verarbeitung eines Profils (PROFIL) in einer außerordentlich kurzen Bestimmungszeit. So kann mit Hilfe der beidseitig der Schienen 209, auf denen das Schienenfahrzeug 210 vorbeirollt, angeordneten Lasereinrichtungen 202 und Abbildungseinrichtungen 5 beispielsweise für fünf Drehgestelle, d.h. zehn Radsätze, im Echtzeit-Betrieb jeweils ein dreidimensionales Profilogramm erstellt werden, das unmittelbar einer Weiterverarbeitung zur Verfügung steht. Für ein solches Profilogramm kann dabei eine Auflösung von weniger als 2,0 mm, insbesondere eine Auflösung von weniger als 0,2 mm, erreicht werden.

In gerätetechnisch vorteilhafter Weise ist mit der Erfindung auch die Möglichkeit einer erheblichen Reduzierung des apparativen Aufwandes im Verglich mit bekannten Verfahren verbunden, weil bei einer translatorischen Bewegungsgeschwindigkeit des Festkörpers 201 von weniger als 3,5 m/s keine Hochgeschwindigkeitskamera eingesetzt werden muß, oder aber bei einem Einsatz einer Hochgeschwindigkeitskamera eine Messung bei einer sehr hohen translatorischen Bewegungsgeschwindigkeit des Festkörpers erfolgen kann. So ist es möglich, eine Profilbestimmung an Schienenfahrzeugrädem 201a eines mit Höchstgeschwindigkeit am Prüfstand 208 vorbei fahrenden ICE vorzunehmen, wobei dann das erfasste Profil (PROFIL) in kürzester Zeit - beispielsweise nach dem Einfahren des Zuges in eine Bearbeitungshalle - an einer Maschine 8 zur Oberflächenbearbeitung als Steuergröße zur Verfügung steht.

Die vorliegende Erfindung ist nicht auf das dargestellte Ausführungsbeispiel beschränkt, sondern umfasst alle im Sinne der Erfindung gleichwirkenden Mittel und Maßnahmen. So muß beispielsweise die Verschleißbestimmung nicht mit der in Fig. 2 angegebenen Kurve "GELERNT" erfolgen, sondern die Vergleichskurve kann - sofern vorhanden und in der Zuordnung möglich - auch durch eine frühere Messung am gleichen Objekt repräsentiert sein. Die in Fig. 3 bis 5 dargestellte Art der Erfassung des Profils (PROFIL) stellt eine bevorzugte, im Sinne der Verfahrenseffizienz und -genauigkeit in ihrer Wechselwirkung mit der erfindungsgemäßen Weiterverarbeitung des Profils (PROFIL) synergistische Art der Datengewinnung dar, die die erfindungsgemäße Weiterverarbeitung jedoch nicht beschränkt.

Mit Bezug auf Fig. 5, der in etwa die Größenverhältnisse des vorstehend genannten Prüfstandes 208 in Relation zu einem Schienenfahrzeugrad 201a zu entnehmen sind, ist festzustellen, dass ein Prüfstand 208, der für den Einsatz des erfindungsgemäßen Verfahrens konzipiert ist, eine sehr viel kleinere und kompaktere Baugröße als die dargestellte - beispielsweise etwa die doppelte Größe eines Schuhkartons - aufweisen kann. Daher kann in den meisten Fällen vorteilhafterweise bei der Implementierung des Prüfstands 208 in eine Gleisanlage auf aufwändige Betonarbeiten verzichtet werden.

### Bezugszeichen

- 1 - 14: Systemelemente

- 90: Anforderung vom Server
- 95: Systemstart

- 100: Aufnahmeschleife
- 101: Laserdistanzsensor
- 102: Signalkonditionierung
- 103: Abstandssignal
- 104: Signalauswertung
- 105: Auslöseimpuls (Trigger)
- 106: Bildauslösung
- 107: Bildmatrix
- 108: Bildspeicherung
- 109: Tmer-Zurücksetzung
- 110, 111: Prüfung von Abbruchbedingungen für 100
- 112: Bildaufnahmestopp
- 113: Datensendung an Server
- 195: Systemstopp

- 201: Festkörper
- 201a: Rad von 210
- 202: Lasereinrichtung
- 203: Lichtband aus 202
- 206: Lichtaufnahmeelement
- 208: Verschleißprüfstand
- 209: Schiene
- 210: Schienenfahrzeug
- B: Basisabstand
- D₁, D₂: Deckfläche von 201, 201 a
- KS1-KS3: Kommunikationssysteme, Untersysteme von TS3
- M: Mantelfläche von 201, 201a
- PG: Profilogrammbild
- PROFIL: Profil von 201, 201a
- RL: reflektiertes Licht
- TS1-TS3: Subsysteme
- v: (translatorische) Geschwindigkeit von 201, 201a
- W1-W11: Systemkopplungen, Wirkungspfeile
- WW1, WW2: Systemkopplungen, Wechselwirkungspfeile

## Patentansprüche

1. Verfahren zur Weiterverarbeitung eines zum Zweck einer Bestimmung von aufgetretenem Verschleiß (DIFFERENZ) erfassten Profils (PROFIL) eines Festkörpers (201, 201 a), wie eines Schienenfahrzeugrades (201 a), wobei der Verschleiß (DIFFERENZ) durch Vergleich der Daten des erfassten Profils (PROFIL) mit einer in einer Datenbank (2) niedergelegten Sollkurve (GELERNT) ermittelt wird und die Daten des erfassten Profils (PROFIL) als Steuergröße zur Steuerung (W5) mindestens einer Maschine (8) zur mechanischen Oberflächenbearbeitung des Schienenfahrzeugrades (201a) eingesetzt werden und wobei je nach dem solchermaßen ermittelten Verschleiß (DIFFERENZ)
- nicht reparaturbedürftige Räder (201a), bei denen die Profilogramme (PROFIL) nach Vergleich mit der Sollkurve (GELERNT) einen vorgegebenen Wert des Verschleißes (WARNWERT) nicht erreichen, von einer Reparatur ausgeschlossen werden, oder
- die Oberflächenbearbeitung instandsetzend als Reprofilierung eines verschlissenen Rades (201a) oder
- zum Ersatz eines nicht mehr reprofilierbaren Rades (201a) als Herstellung eines neuen Rades (201a) erfolgt,
und dabei die Daten des erfassten Profils (PROFIL) zur maschinenspezifischen Ansteuerung (W11) einer Materialzufuhr (14) eingesetzt werden.

2. Verfahren nach Anspruch 1,
**dadurch gekennzeichnet, dass** die Daten des erfassten Profils (PROFIL) als Steuergröße zur Steuerung von Vorschub- und Zustellgeschwindigkeiten zur Einstellung einer durch die mindestens eine Maschine (8) abzutragenden Materialhöhe eingesetzt werden.

3. Verfahren nach Anspruch 1 oder 2,
**dadurch gekennzeichnet, dass** Daten weiterer Kenngrößen, wie Geometriedaten des Festkörpers (201, 201a), Technologiedaten, Werkzeugdaten und/ oder Arbeitspläne, als Steuergrößen zur Steuerung der mindestens einen Maschine (8) zur Oberflächenbearbeitung eingesetzt werden.

4. Verfahren nach einem der Ansprüche 1 bis 3,
**dadurch gekennzeichnet, dass** die Daten des erfassten Profils (PROFIL) zu einer, insbesondere mit Hilfe eines wissensbasierten Bedarfsanalysesystems durchgeführten, Bedarfsanalyse herangezogen werden, auf deren Grundlage Lieferungen in ein/das Materiallager (TS2, 4) gesteuert werden.

5. Verfahren nach einem der Ansprüche 1 bis 4,
**dadurch gekennzeichnet, dass** aus den Profilen (PROFIL) mehrerer Festkörper (201, 201a) verallgemeinernd für jeweils bestimmte Geometrien und/oder Technologien sowie für Daten von eingesetzten Werkzeugen Steuergrößen zur Herstellung eines neuen Festkörpers (201, 201a) bereitgestellt werden.

6. Verfahren nach einem der Ansprüche 1 bis 5,
**dadurch gekennzeichnet, dass** die Steuergrößen aus den Profilen (PROFIL) mehrerer Festkörper (201, 201a) durch Mittelwertbildung, Interpolation und/oder durch eine auf eine weitere Laufzeit oder eine angestrebte Gesamtlaufdauer eines Schienenfahrzeugrades (201a) bezogene Extrapolation gewonnen werden.

7. Verfahren nach einem der Ansprüche 1 bis 6,
**dadurch gekennzeichnet, dass** die Steuergrößen für jeweils einen bestimmten Werkstoffeinsatz und/oder für eine vorbestimmte Oberflächengüte des Festkörpers (201, 201a) bereitgestellt werden.

8. Verfahren nach einem der Ansprüche 1 bis 7,
**dadurch gekennzeichnet, dass** die Daten des Profils (PROFIL) an mehreren unterschiedlichen Standorten (Betriebe A, B, C, Prüfstand 208) erfasst werden.

9. Verfahren nach einem der Ansprüche 1 bis 8,
**dadurch gekennzeichnet, dass** die Erfassung der Daten des Profils (PROFIL) in einem Clienten einer Client-Server-Schaltung mit räumlich vom Clienten entfernten Server (Systemelement 1) realisiert wird.

10. Verfahren nach Anspruch 9
**dadurch gekennzeichnet, dass** Systemstart-Vorgänge (95) des Clienten, wie eine Ansteuerung einer Ampel für ein Schienenfahrzeug (210), die Aktivierung eines Triggers für eine Bildauslösung (106) in einem Aufnahmeelement (206), wie einer CCD-Kamera, ein Einschalten einer zur Gewinnung der Daten des Profils (PROFIL) eingesetzten Lasereinrichtung (202) und/oder der Start einer Aufnahmeschleife (100) zur Gewinnung der Daten des Profils (PROFIL), durch Anforderung (90) vom Server (Systemelement 1) in Gang gesetzt werden.

11. Verfahren nach Anspruch 9 oder 10,
**dadurch gekennzeichnet, dass** die Bestimmung eines Erfassungszeitpunktes (t_{flash}), für den von einem/dem Aufnahmeelement (206) abgegebene Signale zur Gewinnung der Daten des Profils (PROFIL) ausgewählt werden, in einer Aufnahmeschleife (100) erfolgt, zu deren Realisierung eine Hardwarekomponente in einen an einem Gleis (209) für Schlenenfahrzeuge (210) befindlichen Prüfstand (208) inkorporlert ist.

12. Verfahren nach einem der Ansprüche 1 bis 11, insbesondere nach Anspruch 11,
**dadurch gekennzeichnet, dass** zur Erfassung der Daten des Profils (PROFIL), insbesondere in der Aufnahmeschleife (100), zu einem Anfangszeitpunkt (t₀) durch einen Laserdistanzsensor (101, 206) ein Signal (103) für Anfangsbedingungen des Festkörpers (201, 201a), insbesondere eines Ab standes zur Lasereinrichtung (2), einer zeitlichen Veränderung dieses Abstandes und/oder einer Lichtintensitätsverteilung, bereitgestellt wird.

13. Verfahren nach Anspruch 12,
**dadurch gekennzeichnet, dass** aus dem Signal (103) für die Anfangsbedingungen des Festkörpers (201, 201a) durch eine Signalauswertung (104) eine Bestimmung eines/des Erfassungszeitpunktes (t_{flash}) zur Gewinnung der Daten des Profils (PROFIL) erfolgt, an dem ein Auslöseimpuls (105) an ein/das Aufnahmeelement (206) abgegeben wird, wodurch eine Bildauslösung (106) erfolgt, bei der eine Bildmatrix (107) erfasst und das erfasste Bild einer Speicherung (108) zugeführt wird.

14. Verfahren nach Anspruch 13,
**dadurch gekennzeichnet, dass** zur Bestimmung des Erfassungszeitpunktes (t_{flash}), für den vom Aufnahmeelement (206) abgegebene Signale zur Gewinnung der Daten des Profils (PROFIL) ausgewählt werden, ein digitaler Signalprozessor (DSP) verwendet wird.

15. Verfahren nach Anspruch 13 oder 14,
**dadurch gekennzeichnet, dass** der aus den Anfangsbedingungen bestimmte Erfassungszeitpunkt (t_{flash}) mit dem Kriterium möglichst größter Zeitnähe zu dem Anfangszeitpunkt (t₀) ermittelt wird.

16. Verfahren nach einem der Ansprüche 13 bis 15,
**dadurch gekennzeichnet, dass** zur Ermittlung der Anfangsbedingungen des Festkörpers (201, 201a) zum Anfangszeitpunkt (t₀) die vom Aufnahmeelement (206) abgegebenen Signale zur Gewinnung eines Musters, insbesondere einer binär codierten Maske, eingesetzt werden und der Erfassungszeitpunkt (t_{flash}) vorzugsweise mit dem Kriterium des Vorhandenseins, d. h. einer Wiedererkennung, dieses Musters festgelegt wird.

17. Verfahren nach Anspruch 16,
**dadurch gekennzeichnet, dass** zur Gewinnung und Wiedererkennung des Musters eine zum Anfangszeitpunkt (t₀) und/oder zum Er fassungszeitpunkt (t_{flash}) auf dem Festkörper (201, 201 a) vorliegende Lichtintensitätsverteilung, insbesondere in Form einer Transparenzverteilung, in einem Histogramm erfasst und, vorzugsweise unter Verwendung einer Look-up-Tabelle (LUT), einer Bildtransformation, insbesondere einer Schwellenwertoperation, wie einer, vorzugsweise mittels Laplace-Umformung vorgenommenen Hochpassfilterung, unterzogen wird.

18. Verfahren nach Anspruch 16 oder 17,
**dadurch gekennzeichnet, dass** zur Gewinnung und Wiedererkennung des Musters, insbesondere der binär codierten Maske, ein Alphakanal, vorzugsweise ein binärer Alphakanal, eingesetzt wird.

19. Verfahren nach einem der Ansprüche 16 bis 18,
**dadurch gekennzeichnet, dass** zur Gewinnung und Wiedererkennung des Musters Methoden, insbesondere Filteroperationen, der intelligenten Bildverarbeitung, wie ein Schärfen eines Bildes oder die Erzeugung eines Chromeffektes, eingesetzt werden.

20. Verfahren nach einem der Ansprüche 9 bis 19, insbesondere nach Anspruch 11,
**dadurch gekennzeichnet, dass** im Clienten, insbesondere in der Aufnahmeschleife (100), an einen Timer und/oder an eine Anzahl vorbestimmter Messungen gebundene Bedingungsüberprüfungen (110, 111) als Abbruchkriterien für die Gewinnung der Daten des Profils (PROFIL) erfolgen.

21. Verfahren nach einem der Ansprüche 9 bis 20,
**dadurch gekennzeichnet, dass** nach der Gewinnung der Daten des Profils (PROFIL), insbesondere nach einem Stoppen (112) der Bildaufnahme, die Daten des Profils (PROFIL), insbesondere gespeicherte Bilddaten (108), vom Clienten an den Server (Systemelement 1) gesendet werden (113).

22. System zur Weiterverarbeitung eines zum Zweck einer Bestimmung von aufgetretenem Verschleiß (DIFFERENZ) erfassten Profils (PROFIL) eines Festkörpers (201, 201a), wie eines Schienenfahrzeugrades (201a), welches Systembestandteile (1-14, TS1-TS3, KS1, KS2, KS3) aufweist, die durch ihre Kopplungen (W1-W11) und Wechselwirkungen (WW1, WW2) die Steuerung mindestens einer Maschine (8) zur mechanischen Oberflächenbearbeitung des Schienenfahrzeugrades (201a) und eine maschinenspezifische Ansteuerung einer Materialzufuhr (14) unter Verwendung der Daten des erfassten Profils (PROFIL) des Festkörpers (201, 201a) realisieren, wobei mehrere Subsysteme (TS1, TS2, TS3) vorhanden sind, die ein Subsystem (TS1) zur Übermittlung der erfassten Daten des Profils (PROFIL) des Festkörpers (201, 201a) und ein Subsystem (TS3) zur Fertigungssteuerung umfassen, wobei das Subsystem (TS1) zur Übermittlung der erfassten Daten des Profils (PROFIL) eine Datenbank (2) enthält, in der die erfassten Daten der Profile (PROFIL) in Form von Verschleißdaten (DIFFERENZ) sowie auch Soll- und/oder Lernkurven (GELERNT) niedergelegt sind, und wobei das Subsystem (TS3) zur Fertigungssteuerung in Abhängigkeit von einer mindestens aus dem Subsystem (TS1) zur Übermittlung der erfassten Daten des Profils (RROFIL) stammenden Eingangsgröße (W2) gebildet ist, und wobei das Subsystem (TS3) zur Fertigungssteuerung Kommunikationssysteme (KS1, KS2, KS3) umfasst, die mittels eines Koordinierungssystems (5) des Subsystems (TS3) gesteuert werden (W3, W9) und ihrerseits die Maschine (8) zur mechanischen Oberflächenbearbeitung des Schienenfahrzeugrades (201a) und die Materialzufuhr (14) steuern (W5, W11).

23. System nach Anspruch 22,
**gekennzeichnet durch** Systembestandteile (1-14, TS1-TS3, KS1, KS2, KS3), die **durch** ihre Kopplungen (W1-W11) und Wechselwirkungen (WW1, WW2) die Steuerung weiterer Maschinen (11) zur Oberflächenbearbeitung, wie eines Drehautomaten (11) zur mechanischen Oberflächenbearbeitung von Wellen, unter Verwendung der Daten des erfassten Profils (PROFIL) des Festkörpers (201, 201a) realisieren.

24. System nach einem der Ansprüche 22 bis 23,
**dadurch gekennzeichnet, dass** zur Übertragungssteuerung (W5, W8) der Daten des erfassten Profils (PROFIL) an die Maschinen (8, 11) zur Oberflächenbearbeitung und/oder zur Übertragungssteuerung (W11) der Daten des erfassten Profils (PROFIL) für eine Materialzufuhr (14) Hardwareinterfaces, wie elektrische Schnittstellen, z. B. RS232, RS422, TTY, vorgesehen sind.
mindestens ein durch ein Materiallager (4) gebildetes Subsystem (TS2) und ein Subsystem (TS3) zur Fertigungssteuerung umfassen.

25. System nach Anspruch 30,
**dadurch gekennzeichnet, dass** das Subsystem (TS3) zur Fertigungssteuerung mindestens ein Koordinationssystem (5) zur gegenseitigen Abstimmung von Informationssignalen (W2, W3, W6, W9) und mehrere Kommunikationssysteme (KS1, KS2, KS3) mit vorwiegend linearem Informationsfluss von
einem Systemelement zum anderen (W3, W4, W5 in KS1, W6, W7, W8 in KS2; W9, W10, W11 in KS3) umfasst.

26. System nach Anspruch 25,
**dadurch gekennzeichnet, dass** ein Kommunikationssystem (KS1, KS2, KS3) jeweils ein Systemelement (6, 9, 12) zur Datenaufbereitung und ein Hardwareinterface (7, 10, 13) zur Übertragungssteuerung (W5, W8, W11) der Daten des erfassten Profils (PROFIL) an die Maschinen (8, 11) zur Oberflächenbearbeitung und/oder zur Materialzufuhr (14) aufweist

27. System nach einem der Ansprüche 22 bis 26,
**dadurch gekennzeichnet, dass** zur Realisierung der Kopplungen (W1-W11) und Wechselwirkungen (WW1, WW2) zwischen den Systembestandteilen (1-14, TS1-TS3, KS1, KS2, KS3) eine, vorzugsweise durch einen Computer (Systemelement 1) gestützte, Datenfernübertragung, insbesondere über Internet (INET) und/oder lokale Netzwerke (LAN), besonders bevorzugt unter Verwendung eines Feldbus und/oder des TCP/IP-Protokolls, eingesetzt wird.

28. System nach einem der Ansprüche 22 bis 27,
**gekennzeichnet durch** ein Subsystem (TS1), das zur Datenübergabe, insbesondere zur Übermittlung von an mehreren unterschiedlichen Stellen (Betriebe A, B, C, Prüfstand 208) erfassten Daten von Profilen (PROFIL), insbesondere von Schienenfahrzeugrädern (201 a), in einem
Systemelement (1) eine Schnittstelle enthält, eine Anbindung über Internet (INET) oder ein lokales Netzwerk (LAN) realisiert.

29. System nach Anspruch 28,
**dadurch gekennzeichnet, dass** das Subsystem (TS1), das zur Datenübergabe der erfassten Daten der Profile (PROFIL) dient, einen Server (Systemelement 1) einer Client-Server-Schaltung enthält, wobei die Daten der Profile (PROFIL) mit Hilfe des Clienten erfasst werden.

30. System nach einem der Ansprüche 28 bis 29,
**dadurch gekennzeichnet, dass** das Subsystem (TS1), das zur Datenübergabe der erfassten Daten der Profile (PROFIL), insbesondere von Schienenfahrzeugrädem (201a), dient, ein Bedarfsanalysesystem als Systemelement (3) enthält.

31. System nach Anspruch 30,
**dadurch gekennzeichnet, dass** das Bedarfsanalysesystem (3) einerseits mit der Datenbank (2) und andererseits mit einem/dem Materiallager (TS2, 4) in Wechselwirkung (WW1, WW2) steht.

32. System nach Anspruch 30 oder 31
**dadurch gekennzeichnet, dass** in das Bedarfsanalysesystem (3), insbesondere wissensbasierte, Datenbanken implementiert sind.

33. System nach Anspruch 32,
**dadurch gekennzeichnet, dass** die in das Bedarfsanalysesystem (3) implementierten Datenbanken empirisch durch Extra- oder Interpolation von Messwerten des Verschleißes (DIFFERENZ) gewonnene Daten und/oder Daten enthalten, die auf einem theoretisch aufgestellten Verschleißmodell beruhen.

34. System nach einem der Ansprüche 32 bis 33, insbesondere nach Anspruch 29, System nach einem der Ansprüche 22 bis 33 insbesondere nach Anspruch 39, **gekennzeichnet durch** einen, insbesondere im Clienten
angeordneten, digitalen Signalprozessor (DSP) zur Bestimmung eines Erfassungszeitpunktes (t_{flash}), an dem eine Erfassung der Daten des Profils (PROFIL) erfolgt.

35. System nach einem der Ansprüche 22 bis 34,
**gekennzeichnet durch** ein in ein Subsystem (TS1, TS2, TS3) integriertes Display, in dem in Form grafischer Darstellungen und/oder verbaler Informationen Daten des erfassten Profils (PROFIL), Sollkurven (GELERNT), des Verschleißes (DIFFERENZ), Informationen zu Mess- und/oder zu bearbeitenden Stellen und/oder Ergebniszusammenfassungen (ERGEBNIS) aus einem Vergleich des erfassten Profils (PROFIL) mit einem Grenzwert (GRENZWERT) oder Wamwert (WARNWERT) angezeigt werden.

## Claims

1. A method of further processing a profile (PROFILE) - detected for the purpose of determining the wear (DIFFERENCE) which has occurred - of a solid body (201, 201a), such as a rail vehicle wheel (201a), wherein the wear (DIFFERENCE) is determined by a comparison of the data of the detected profile (PROFILE) with a nominal curve (LEARNED) filed in a data bank (2) and the data of the detected profile (PROFILE) are used as a control variable for controlling (**W5**) at least one machine (8) for the mechanical surface treatment of the rail vehicle wheel (201a), and wherein, depending upon the wear (DIFFERENCE) determined in this way,
- wheels (201a) which are not in need of repair and in which the profilograms (PROFILE) do not achieve a pre-set value of the wear (CRITICAL VALUE) after a comparison with the nominal curve (LEARNED), are excluded from repair, or
- the surface treatment is carried out in the manner of a repair, in the form of a re-profiling of a worn wheel (201a), or
- in the form of the production of a new wheel (201a) for the replacement of a wheel (201a) which is no longer capable of being re-profiled,
and, in this case, the data of the detected profile (PROFILE) are used for the machine-specific control (**W11**) of a supply of material (14).

2. A method according to Claim 1, **characterized in that** the data of the detected profile (PROFILE) are used as a control variable for controlling advance and delivery speeds in order to set a height of material to be removed by the at least one machine (8).

3. A method according to Claim 1 or 2, **characterized in that** data of further characteristics, such as geometrical data of the solid body (201, 201a), technological data, tool data and/or working plans, are used as control variables for controlling the at least one machine (8) for surface treatment.

4. A method according to any one of Claims 1 to 3, **characterized in that** the data of the detected profile (PROFILE) are used for a demand analysis which is carried out, in particular, with the aid of a knowledge-based demand-analysis system and on the basis of which deliveries into a / the store of material (**TS2**, 4) are controlled.

5. A method according to any one of Claims 1 to 4, **characterized in that** control variables for producing a new solid body (201, 201a) are prepared from the profiles (PROFILE) of a plurality of solid bodies (201, 201a) in a generalizing manner for geometries and/or technologies specified in each case as well as for data of tools used.

6. A method according to any one of Claims 1 to 5, **characterized in that** the control variables are obtained from the profiles (PROFILE) of a plurality of solid bodies (201, 201 a) by averaging, interpolation and/or by an extrapolation with respect to a further running time or an intended overall running duration of a rail vehicle wheel (201a).

7. A method according to any one of Claims 1 to 6, **characterized in that** the control variables are prepared for one specified use of material in each case and/or for a pre-determined surface quality of the solid body (201, 201a).

8. A method according to any one of Claims 1 to 7, **characterized in that** the data of the profile (PROFILE) are detected at a plurality of different locations (plants A, B, C, test bed 208).

9. A method according to any one of Claims 1 to 8, **characterized in that** the detection of the data of the profile (PROFILE) is carried out in a client of a client / server circuit with the server (system element 1) at a spatial distance from the client.

10. A method according to Claim 9, **characterized in that** system-start procedures (95) of the client, such as the actuation of a stop light for a rail vehicle (210), the activation of a trigger for an image formation (106) in a recording element (206), such as a CCD camera, the switching-on of a laser device (202) used for obtaining the data of the profile (PROFILE) and/or the start of a recording loop (100) for obtaining the data of the profile (PROFILE), are put into effect by a demand (90) from the server (system element 1).

11. A method according to Claim 9 or 10, **characterized in that** a detection moment (**t**_{flash}), for which signals emitted by a / the recording element (206) for obtaining the data of the profile (PROFILE) are selected, is determined in a recording loop (100), for the implementation of which a hardware component is incorporated in a test bed (208) present on a rail (209) for rail vehicles (210).

12. A method according to any one of Claims 1 to 11, in particular according to Claim 11, **characterized in that** a signal (103) for starting conditions of the solid body (201, 201 a), in particular a distance from the laser device (2), a change in time of the said distance and/or a distribution of the light intensity, is prepared by a laser distance sensor (101, 206) at a starting moment (to) in order to detect the data of the profile (PROFILE), in particular in the recording loop (100).

13. A method according to Claim 12, **characterized in that** a / the detection moment (**t**_{flash}) is determined from the signal (103) for the starting conditions of the solid body (201, 201 a) by a signal-evaluation means (104) in order to obtain the data of the profile (PROFILE), at which a triggering pulse (105) is delivered to a / the receiving element (206), as a result of which an image formation (106) takes place, in which an image matrix is detected and the detected image (107) is passed on to a memory (108).

14. A method according to Claim 13, **characterized in that** a digital signal processor (**DSP**) is used in order to determine the detection moment (**t**_{flash}) for which signals emitted by the receiving element (206) are selected in order to obtain the data of the profile (PROFILE).

15. A method according to Claim 13 or 14, **characterized in that** the detection moment (**t**_{flash}) determined from the starting conditions is determined with the criterion of as great as possible a time proximity to the starting moment (to).

16. A method according to any one of Claims 13 to 15, **characterized in that** in order to determine the starting conditions of the solid body (201, 201a) at the starting moment (to) the signals emitted by the recording element (206) are used in order to obtain a pattern, in particular a binary-coded mask, and the detection moment (**t**_{flash}) is set preferably with the criterion of the presence, *i*.*e*. a recognition, of the said pattern.

17. A method according to Claim 16, **characterized in that** in order to determine and recognize the pattern a distribution - in particular in the form of a transparency distribution - of the light intensity present on the solid body (201, 201a) at the starting moment (to) and/or at the detection moment (**t**_{flash}) is detected in a histogram and, preferably whilst using a look-up table (**LUT**), is subjected to an image transformation, in particular a threshold-value operation, such as a high-pass filtering preferably carried out by means of a Laplace transformation.

18. A method according to Claim 16 or 17, **characterized in that** an alpha channel, preferably a binary alpha channel, is used in order to obtain and recognize the pattern, in particular the binary-coded mask.

19. A method according to any one of Claims 16 to 18, **characterized in that** methods, in particular filtering operations, of intelligent image processing, such as a sharpening of an image or the production of a chrome effect, are used in order to obtain and recognize the pattern.

20. A method according to any one of Claims 9 to 19, in particular according to Claim 11, **characterized in that** condition checks (110, 111) linked to a timer and/or to a number of pre-determined measurements are carried out as break-off criteria for obtaining the data of the profile (PROFILE) in the client, in particular in the recording loop (100).

21. A method according to any one of Claims 9 to 20, **characterized in that** after the data of the profile (PROFILE) have been obtained, in particular after the image recording has been stopped (112), the data of the profile (PROFILE), in particular stored image data (108), are sent (113) from the client to the server (system element 1).

22. A system for further processing a profile (PROFILE) - detected for the purpose of determining the wear (DIFFERENCE) which has occurred - of a solid body (201, 201a), such as a rail vehicle wheel (201a), which comprises system components (1 to 14, **TS1** to TS3, **KS1**, **KS2, KS3**) which by their couplings (**W1** to **W11**) and interactions (**WW1**, **WW2**) implement the control of at least one machine (8) for the mechanical surface treatment of the rail vehicle wheel (201a) and a machine-specific control of a supply of material (14) whilst using the data of the detected profile (PROFILE) of the solid body (201, 201a), wherein a plurality of sub-systems (**TS1**, **TS2, TS3**) are present which comprise a sub-system (**TS1**) for transmitting the detected data of the profile (PROFILE) of the solid body (201, 201a) and a sub-system (**TS3**) for manufacturing control, wherein the sub-system (**TS1**) for transmitting the detected data of the profile (PROFILE) contains a data bank (2) in which the detected data of the profiles (PROFILE) are filed in the form of wear data (DIFFERENCE) as well as nominal and/or learning curves (LEARNED), and wherein the sub-system (**TS3**) for manufacturing control is formed in a manner dependent upon an input variable (**W2**) derived at least from the sub-system (**TS1**) for transmitting the detected data of the profile (PROFILE), and wherein the sub-system (**TS3**) for manufacturing control comprises communications systems (**KS1, KS2, KS3**) which are controlled (**W3, W9**) by means of a co-ordination system (5) of the sub-system (**TS3**) and which in turn control (**W5, W11**) the machine (**8**) for the mechanical surface treatment of the rail vehicle wheel (201a) and the supply of material (14).

23. A system according to Claim 22, **characterized by** system components (1 to 14, **TS1** to TS3, **KS1,** KS2, KS3) which by their couplings (**W1** to **W11**) and interactions (**WW1, WW2**) implement the control of further machines (11) for surface treatment, such as an automatic lathe (11) for the mechanical surface treatment of shafts, whilst using the data of the detected profile (PROFILE) of the solid body (201, 201a).

24. A system according to one of Claims 22 to 23, **characterized in that** hardware interfaces, such as electrical interfaces, for example RS232, RS422, TTY, are provided for the transmission control (**W5, W8**) of the data of the detected profile (PROFILE) to the machines (8, 11) for surface treatment and/or for the transmission control (**W11**) of the data of the detected profile (PROFILE) for a supply of material (14).

25. A system according to Claim 30 [*sic*], **characterized in that** the sub-system (**TS3**) for manufacturing control comprises at least one co-ordination system (5) for the mutual adaptation of information signals (**W2, W3, W6, W9**) and a plurality of communications systems (**KS1, KS2, KS3**) with a predominantly linear information flow from one system element to the other (**W3, W4, W5** in **KS1; W6, W7, W8 in KS2; W9, W10, W11** in **KS3**).

26. A system according to Claim 25, **characterized in that** a communications system (**KS1, KS2, KS3**) has in each case a system element (6, 9, 12) for data preparation and a hardware interface (7, 10, 13) for the transmission control (**W5, W8, W11**) of the data of the detected profile (PROFILE) to the machines (8, 11) for surface treatment and/or for the supply of material (14).

27. A system according to any one of Claims 22 to 26, **characterized in that** a remote transmission of data, preferably assisted by a computer (system element 1), is used in order to implement the couplings (**W1** to **W11**) and interactions (**WW1, WW2**) between the system components (1 to 14, **TS1** to **TS3, KS1, KS2, KS3**), in particular over the Internet (INET) and/or local networks (LAN), and in a particularly preferred manner whilst using a field bus and/or the TCP/IP protocol.

28. A system according to any one of Claims 22 to 27, **characterized by** a sub-system (**TS1**) which contains an interface for data transmission, in particular in order to transmit the data - detected at a plurality of different locations (plants **A, B, C,** test bed 208) - of profiles (PROFILE), in particular of rail vehicle wheels (201 a), in a system element (1) and which implements a link over the Internet (INET) or a local network (LAN).

29. A system according to Claim 28, **characterized in that** the sub-system (**TS1**), which is used for the transmission of the detected data of the profiles (PROFILE), contains a server (system element 1) of a client / server circuit, wherein the data of the profiles (PROFILE) are detected with the aid of the client.

30. A system according to any one of Claims 28 to 29, **characterized in that** the subsystem (**TS1**), which is used for the transmission of the detected data of the profiles (PROFILE), in particular of rail vehicle wheels (201a), contains a demand-analysis system as a system element (3).

31. A system according to Claim 30, **characterized in that** the demand-analysis system (3) is in interaction (**WW1**, **WW2**) with the data bank (2) on the one hand and with a /the store of material (TS2, 4) on the other hand.

32. A system according to Claim 30 or 31, **characterized in that** data banks are implemented in the demand-analysis system (3), in particular the knowledge-based demand-analysis system (3).

33. A system according to Claim 32, **characterized in that** the data banks implemented in the demand-analysis system (3) contain data obtained empirically by extrapolation or interpolation of measurement values of the wear (DIFFERENCE) and/or data which are based upon a wear model set up on a theoretical basis.

34. A system according to any one of Claims 22 to 33, in particular according to Claim 29, **characterized by** a digital signal processor (**DSP**), in particular arranged in the client, to determine a detection moment (**t**_{flash}) at which the data of the profile (PROFILE) are detected.

35. A system according to any one of Claims 22 to 34, **characterized by** a display which is integrated in a sub-system (**TS1, TS2, TS3**) and in which data of the detected profile (PROFILE), nominal curves (LEARNED) of the wear (DIFFERENCE), information on measurement locations and/or on treatment locations and/or combinations of results (RESULT) from a comparison of the detected profile (PROFILE) with a threshold value (THRESHOLD) or critical value (CRITICAL VALUE) are displayed in the form of graphic illustrations and/or verbal information.

## Revendications

1. Procédé pour le retraitement d'un profil (PROFIL), saisi en vue de déterminer une usure survenue (DIFFERENCE), d'un corps solide (201, 201a), comme d'une roue de véhicule sur rails (201a), dans lequel l'usure (DIFFERENCE) est déterminée par une comparaison des données du profil saisi (PROFIL) avec une courbe théorique (APPRIS) mémorisée dans une base de données (2), et les données du profil saisi (PROFIL) sont mises en oeuvre comme une grandeur de commande pour commander (W5) au moins une machine (8) pour un traitement de surface mécanique de la roue de véhicule sur rails (201a), et dans lequel respectivement en fonction de l'usure (DIFFERENCE) ainsi déterminée
- les roues (201a) ne nécessitant pas de réparation, pour lesquelles, après comparaison avec la courbe théorique (APPRIS), les profilogrammes (PROFIL) n'atteignent pas une valeur prédéfinie de l'usure (VALEUR D'AVERTISSEMENT), sont exclues d'une réparation, ou
- le traitement de surface est effectué de façon corrective comme un reprofilage d'une roue usée (201a), ou
- le traitement de surface est effectué comme la fabrication d'une roue neuve (201a) pour remplacer une roue (201a) qui ne peut plus être reprofilée,
et les données du profil saisi (PROFIL) sont alors mises en oeuvre pour un pilotage spécifique à la machine (W11) d'un apport de matière (14).

2. Procédé selon la revendication 1, **caractérisé en ce que** les données du profil saisi (PROFIL) sont mises en oeuvre en tant que grandeur de commande pour commander des vitesses d'avance et d'approche pour le réglage d'une hauteur de matériau à enlever par ladite au moins une machine (8).

3. Procédé selon la revendication 1 ou 2, **caractérisé en ce que** des données de grandeurs caractéristiques supplémentaires, comme des données géométriques du corps solide (201, 201a), des données technologiques, des données d'outil et/ou des plans de travail, sont utilisées comme des grandeurs de commande pour piloter ladite au moins une machine (8) pour le traitement de surface.

4. Procédé selon l'une quelconque des revendications 1 à 3, **caractérisé en ce que** les données du profil saisi (PROFIL) sont utilisées pour une analyse des besoins, en particulier exécutée à l'aide d'un système d'analyse des besoins à base de connaissances, sur la base de laquelle des livraisons à un/au dépôt de matières (TS2, 4) sont commandées.

5. Procédé selon l'une quelconque des revendications 1 à 4, **caractérisé en ce qu'**à partir des profils (PROFIL) de plusieurs corps solides (201, 201a), en généralisant pour respectivement certaines géométries et/ou technologies ainsi que pour des données d'outils mis en oeuvre, des grandeurs de commande pour la fabrication d'un nouveau corps solide (201, 201a) sont fournies.

6. Procédé selon l'une quelconque des revendications 1 à 5, **caractérisé en ce que** les grandeurs de commande sont obtenues à partir des profils (PROFIL) de plusieurs corps solides (201, 201a) par un établissement de moyenne, une interpolation et/ou une extrapolation mise en relation avec un temps de fonctionnement supplémentaire ou une durée de fonctionnement globale visée d'une roue de véhicule sur rails (201a).

7. Procédé selon l'une quelconque des revendications 1 à 6, **caractérisé en ce que** les grandeurs de commande sont prévues pour respectivement une certaine mise en oeuvre de matière et/ou pour une qualité de surface prédéterminée du corps solide (201, 201a).

8. Procédé selon l'une quelconque des revendications 1 à 7, **caractérisé en ce que** les données du profil (PROFIL) sont saisies à plusieurs endroits différents (ateliers A, B, C, banc d'essai 208).

9. Procédé selon l'une quelconque des revendications 1 à 8, **caractérisé en ce que** la saisie des données du profil (PROFIL) est réalisée sur un client d'une connexion client/serveur avec un serveur (élément de système 1) physiquement éloigné du client.

10. Procédé selon la revendication 9, **caractérisé en ce que** des opérations de démarrage de système (95) du client, comme un pilotage d'un feu de circulation pour un véhicule sur rails (210), l'activation d'un déclencheur pour un déclenchement de prise de vue (106) dans un élément d'enregistrement (206), comme une caméra CCD, un branchement d'un dispositif laser (202) mis en oeuvre pour obtenir les données du profil (PROFIL) et/ou le démarrage d'une boucle d'enregistrement (100) pour obtenir les données du profil (PROFIL), sont mises en marche par une requête (90) du serveur (élément de système 1).

11. Procédé selon la revendication 9 ou 10, **caractérisé en ce que** la détermination d'un instant de saisie (t_{flash}), pour lequel des signaux délivrés par un/l'élément d'enregistrement (206) pour obtenir les données du profil (PROFIL) sont sélectionnés, s'effectue dans une boucle d'enregistrement (100) pour la réalisation de laquelle un composant matériel est incorporé dans un banc d'essai (208) qui se trouve sur un rail (209) pour des véhicules sur rails (210).

12. Procédé selon l'une quelconque des revendications 1 à 11, en particulier selon la revendication 11, **caractérisé en ce que** pour la saisie des données du profil (PROFIL), en particulier dans la boucle d'enregistrement (100), à un instant initial (t₀), un capteur de distance laser (101, 206) fournit un signal (103) pour des conditions initiales du corps solide (201, 201a), en particulier d'une distance par rapport au dispositif laser (2), d'une modification dans le temps de cette distance et/ou d'une distribution d'intensités lumineuses.

13. Procédé selon la revendication 12, **caractérisé en ce qu'**à partir du signal (103) pour les conditions initiales du corps solide (201, 201a), par l'intermédiaire d'une interprétation de signal (104), une détermination d'un/de l'instant de saisie (t_{flasn}) pour obtenir les données du profil (PROFIL) est effectuée, instant où une impulsion de déclenchement (105) est délivrée à un/l'élément d'enregistrement (206), de sorte qu'un déclenchement de prise de vue (106) est effectué pendant lequel une matrice d'image (107) est saisie et l'image saisie est amenée à un stockage (108).

14. Procédé selon la revendication 13, **caractérisé en ce que** pour la détermination de l'instant de saisie (t_{flash}), pour lequel des signaux délivrés par l'élément d'enregistrement (206) sont choisis pour obtenir les données du profil (PROFIL), un processeur numérique de signaux (DSP) est utilisé.

15. Procédé selon la revendication 13 ou 14, **caractérisé en ce que** l'instant de saisie (t_{flash}) déterminé à partir des conditions initiales est déterminé avec le critère d'être aussi proche que possible de l'instant initial (t₀).

16. Procédé selon l'une quelconque des revendications 13 à 15, **caractérisé en ce que** pour la détermination des conditions initiales du corps solide (201, 201a) à l'instant initial (t₀), les signaux délivrés par l'élément d'enregistrement (206) pour l'obtention d'un motif, en particulier d'un masque à codage binaire, sont mis en oeuvre et l'instant de saisie (t_{flash}) est de préférence fixé avec le critère de la présence, c'est-à-dire d'une reconnaissance, de ce motif.

17. Procédé selon la revendication 16, **caractérisé en ce que** pour l'obtention et pour la reconnaissance du motif, une distribution d'intensités lumineuses, en particulier sous la forme d'une distribution de transparences, présente à l'instant initial (t₀) et/ou à l'instant de saisie (t_{flash}) sur le corps solide (201, 201a), est saisie dans un histogramme et est soumise, de préférence en utilisant une table de consultation (LUT) à une transformation d'image, en particulier à une opération de seuillage, comme un filtrage passe-haut effectué de préférence au moyen d'une transformation de Laplace.

18. Procédé selon la revendication 16 ou 17, **caractérisé en ce que** pour l'obtention et la reconnaissance du motif, en particulier du masque à codage binaire, un canal alpha, de préférence un canal alpha binaire, est mis en oeuvre.

19. Procédé selon l'une quelconque des revendications 16 à 18, **caractérisé en ce que** pour l'obtention et la reconnaissance du motif, des procédés, en particulier des opérations de filtrage, du traitement d'image intelligent, comme une mise au point d'une image ou la génération d'un effet chrome, sont mis en oeuvre.

20. Procédé selon l'une quelconque des revendications 9 à 19, en particulier selon la revendication 11, **caractérisé en ce que** sur le client, en particulier dans la boucle d'enregistrement (100), des vérifications de conditions (110, 110) liées à un temporisateur et/ou à un nombre de mesures prédéterminées sont effectuées en tant que critères d'abandon pour obtenir les données du profil (PROFIL).

21. Procédé selon l'une quelconque des revendications 19 et 20, **caractérisé en ce qu'**après l'obtention des données du profil (PROFIL), en particulier après un arrêt (112) de l'enregistrement d'image, les données du profil (PROFIL), en particulier des données d'image mémorisées (108), sont envoyées par le client au serveur (élément de système 1) (113).

22. Système pour le retraitement d'un profil (PROFIL) saisi en vue d'une détermination d'une usure survenue (DIFFERENCE) d'un corps solide (201, 201a), comme d'une roue de véhicule sur rails (201a), qui présente des composants de système (1 à 14, TS 1 à TS3, KS1, KS2, KS3) qui réalisent par leurs couplages (W1 à W11) et interactions (WW1, WW2) la commande d'au moins une machine (8) pour le traitement de surface mécanique de la roue de véhicule sur rails (201a) et un pilotage spécifique à la machine d'un apport de matière (14) en utilisant les données du profil saisi (PROFIL) du corps solide (201, 201a), dans lequel il existe plusieurs sous-systèmes (TS1, TS2, TS3) qui comprennent un sous-système (TS1) pour la transmission des données saisies du profil (PROFIL) du corps solide (201, 201a) et un sous-système (TS3) pour la commande de fabrication, dans lequel le sous-système (TS1) contient pour la transmission des données saisies du profil (PROFIL) comprend une base de données (2) dans laquelle les données saisies des profils (PROFIL) sont mémorisées sous la forme de données d'usure (DIFFERENCE) ainsi que des courbes théoriques et/ou d'apprentissage (APPRIS), et dans lequel le sous-système (TS3) pour la commande de fabrication est formé en fonction d'une grandeur d'entrée (W2) provenant au moins du sous-système (TS1) pour la transmission des données saisies du profil (PROFIL), et dans lequel le sous-système (TS3) pour la commande de fabrication comprend des systèmes de communication (KS1, KS2, KS3) qui sont commandés (W3, W9) au moyen d'un système de coordination (5) du sous-système (TS3) et commandent (W5, W11) à leur tour la machine (8) pour le traitement de surface mécanique de la roue de véhicule sur rails (201a) et l'apport de matière (14).

23. Système selon la revendication 22, **caractérisé par** des composants de système (1 à 14, TS1 à TS3, KS1, KS2, KS3) qui réalisent par leurs couplages (W1 à W11) et interactions (WW1, WW2) la commande d'autres machines (11) pour le traitement de surface, comme d'un tour automatique (11) pour le traitement de surface mécanique d'arbres, en utilisant les données du profil saisi (PROFIL) du corps solide (201, 201a).

24. Système selon l'une quelconque des revendications 22 et 23, **caractérisé en ce que** pour la commande de transmission (W5, W8) des données du profil saisi (PROFIL) aux machines (8, 11) pour le traitement de surface et/ou pour la commande de transmission (W11) des données du profil saisi (PROFIL) pour un apport de matière (14), des interfaces matérielles, comme des interfaces électriques, par exemple RS232, RS422, TTY, sont prévues.

25. Système selon la revendication 24, **caractérisé en ce que** le sous-système (TS3) pour la commande de fabrication comprend au moins un système de coordination (5) pour l'adaptation mutuelle de signaux d'information (W2, W3, W6, W9) et plusieurs systèmes de communication (KS1, KS2, KS3) avec un flux d'informations principalement linéaire d'un élément de système à l'autre (W3, W4, W5 dans KS1 ; W6, W7, W8 dans KS2 ; W9, W10, W11 dans KS3).

26. Système selon la revendication 25, **caractérisé en ce qu'**un système de communication (KS1, KS2, KS3) présente respectivement un élément de système (8, 9, 12) pour la préparation de données et une interface matérielle (7, 10, 13) pour la commande de transmission (W5, W8, W11) des données du profil saisi (PROFIL) aux machines (8, 11) pour le traitement de surface et/ou pour l'apport de matière (14).

27. Système selon l'une quelconque des revendications 22 à 26, **caractérisé en ce que** pour la réalisation des couplages (W1 à W11) et des interactions (WW1, WW2) entre les composants de système (1 à 14, TS1 à TS3, KS1, KS2, KS3), une télétransmission de données, de préférence assistée par ordinateur (élément de système 1), en particulier par internet (INET) et/ou des réseaux locaux (LAN), de façon particulièrement préférée en utilisant un bus de terrain et/ou le protocole TCP/IP, est mise en oeuvre.

28. Système selon l'une quelconque des revendications 22 à 27, **caractérisé par** un sous-système (TS1) qui comprend pour le transfert de données, en particulier pour la transmission de données saisies à plusieurs endroits différents (ateliers A, B, C, banc d'essai 208) de profils (PROFIL), en particulier de roues de véhicule sur rails (201a), une interface dans un élément de système (1), réalise une connexion par internet (INET) ou un réseau local (LAN).

29. Système selon la revendication 28, **caractérisé en ce que** le sous-système (TS1) qui sert au transfert de données des données saisies des profils (PROFIL) comprend un serveur (élément de système 1) d'une connexion client/serveur, dans lequel les données des profils (PROFIL) sont saisies à l'aide du client.

30. Système selon l'une quelconque des revendications 28 et 29, **caractérisé en ce que** le sous-système (TS1) qui sert au transfert de données des données saisies des profils (PROFIL), en particulier de roues de véhicule sur rails (201a), comprend un système d'analyse des besoins en tant qu'élément de système (3).

31. Système selon la revendication 30, **caractérisé en ce que** le système d'analyse des besoins (3) interagit d'une part avec la base de données (2) et d'autre part avec un/le dépôt de matière (TS2, 4) (WW1, WW2).

32. Système selon la revendication 30 ou 31, **caractérisé en ce que** des bases de données, en particulier à base de connaissances, sont mises en oeuvre dans le système d'analyse des besoins (3).

33. Système selon la revendication 32, **caractérisé en ce que** les bases de données mises en oeuvre dans le système d'analyse des besoins (3) contiennent des données obtenues de façon empirique par extrapolation ou interpolation de valeurs mesurées de l'usure (DIFFERENCE) et/ou des données qui reposent sur un modèle d'usure établi de façon théorique.

34. Système selon l'une quelconque des revendications 22 à 33, en particulier selon la revendication 29, **caractérisé par** un processeur numérique de signaux (DSP), en particulier disposé sur le client, pour la détermination d'un instant de saisie (t_{flash}) auquel une saisie des données du profil (PROFIL) a lieu.

35. Système selon l'une quelconque des revendications 22 à 34, **caractérisé par** un affichage intégré dans un sous-système (TS1, TS2, TS3) dans lequel, sous forme de représentations graphiques et/ou d'informations verbales, des données du profil saisi (PROFIL), des courbes théoriques (APPRIS), de l'usure (DIFFERENCE), des informations concernant des points de mesure et/ou des points à traiter et/ou des résumés de résultats (RESULTAT) provenant d'une comparaison du profil saisie (PROFIL) avec une valeur de limite (LIMITE) ou une valeur d'avertissement (VALEUR D'AVERTISSEMENT) sont affichés.
